# FASCICULE DE BREVET EUROPEEN

(11) **EP 1 520 769 B1**
(45) Date de publication et mention de la délivrance du brevet: **05.09.2007**
(21) Numéro de dépôt: 04300602.2
(22) Date de dépôt: 16.09.2004
(51) Int. Cl.: B62D 21/20, D07B 1/16

(54) **Dispositif de liaison pour structure de véhicule automobile et structure de véhicule comportant un tel dispositif**
Verbindungselement für Fahrzeugstruktur, und Fahrzeugstruktur mit einem derartigen Verbindungselement
linking element for vehicule body structure and vehicle body structure with such an element

(30) Priorité: 30.09.2003 FR 0311445
(43) Date de publication de la demande: 06.04.2005
(73) Titulaire: Peugeot Citroën Automobiles S.A., 78140 Vélizy Villacoublay (FR)
(72) Inventeur: Merlette, Nicolas, 78330 Fontenay-Le-Fleury (FR); Lambert, Thierry, PSA Peugeot Citroen, 95100 Argenteuil (FR)
(74) Mandataire: Fernandez, Francis Lionel

(56) Documents cités:
- EP-A- 1 209 062
- DE-A- 10 040 673
- DE-A- 10 059 261
- DE-C- 10 214 372
- GB-A- 811 501
- GB-A- 982 820

## Description

L'invention se rapporte à un dispositif de liaison pour structure de véhicule automobile, ainsi qu'à une structure de véhicule comportant un tel dispositif.

L'invention concerne plus particulièrement un dispositif de liaison pour structure de véhicule automobile, constitué d'une pièce oblongue composée d'un assemblage d'une part d'au moins un élément élémentaire oblong métallique et d'autre part d'au moins un élément élémentaire oblong en matière viscoélastiques, Disposé de façon à ce qu'en section transverse, le dispositif de liaison présente, au moins un premier et au moins un second éléments empilés avec alternance selon au moins deux directions non parallèles.

On connaît déjà dans l'état de la technique de tels dispositifs.

Ces dispositifs appelés "tirants" sont utilisés notamment pour améliorer le confort vibratoire et acoustique des véhicules par amortissement des vibrations. En effet, les vibrations du moteur et des trains induisent des excitations mécaniques dans la caisse du véhicule. Ces dernières excitent des modes globaux de la caisse pour des basses fréquences. Ainsi, les excitations mécaniques de la caisse influent fortement sur le comportement routier et le confort du véhicule.

Les tirants utilisés, pour contrôler ces modes globaux, sont placés au niveau du soubassement du véhicule. Ils relient différentes pièces du soubassement de façon à rigidifier le véhicule et à amortir les vibrations.

L'une des technologies consiste à composer des tirants à l'aide de matériaux métalliques et de matériaux possédant un caractère viscoélastique. Le matériau viscoélastique possède la particularité de se déformer sous l'effet des sollicitations que lui impose la structure. Il permet la conversion de l'énergie vibratoire en chaleur. Ainsi, les matériaux viscoélastiques présentent l'avantage de contrôler les modes globaux de la caisse par amortissement.

Un tel dispositif, conforme au préambule de la revendication 1, est connu du document EP 1 209 062. Dans ce document, le dispositif de liaison est constitué d'un tube inséré dans un cylindre. Le tube et le cylindre sont chacun reliés à une pièce de soubassement du véhicule. Le tube et le cylindre sont couplés par un matériau viscoélastique afin de contrôler leur déplacement.

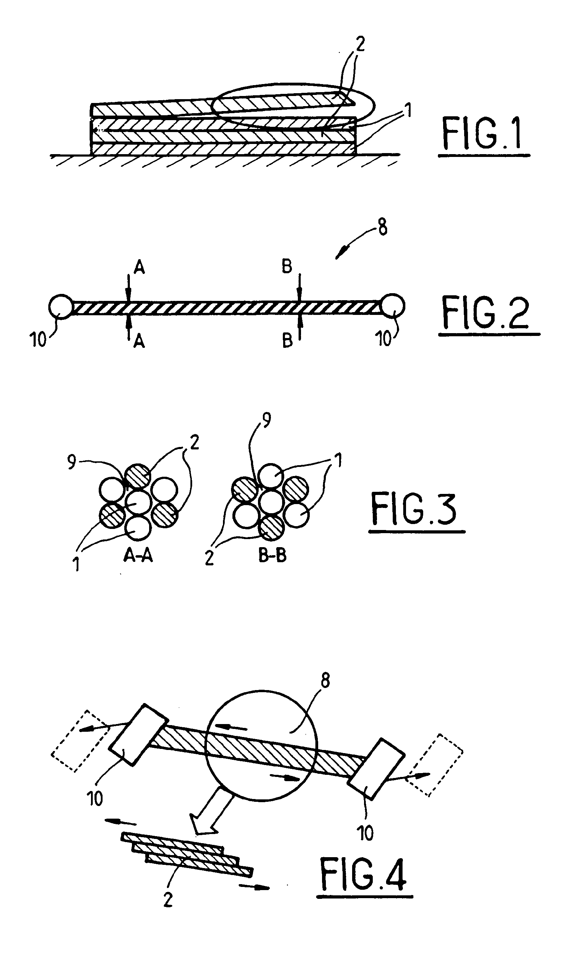

Parmi les autres dispositifs connus, on peut citer des tirants formés par un empilement alternatif de bandes 1 en matériaux métalliques (acier...) et de bandes 2 en matériaux viscoélastiques, comme représenté à la figure 1. Ces dispositifs permettent la dissipation de l'énergie vibratoire, grâce à un cisaillement de la bande 2 en matériau viscoélastique placée entre deux bandes 1 d'acier.

Toutefois, ce type de tirant possède des inconvénients majeurs. Ainsi, lors d'une contrainte importante, le matériau viscoélastique 2 peut se déchirer ou se décoller des bandes 1 métalliques et entraîner la rupture du tirant, tel que représenté à la figure 1. Afin d'éviter ce type de dégradation, les tirants actuels sont souvent surdimensionnés. Ce type de tirant peut ainsi peser de 1 à 3 kilos.

D'autre part les tirants, correspondants à ceux décrits précédemment, sont mis au point pour un type de véhicule. Ainsi, pour chaque nouveau véhicule, la conception des tirants doit être totalement reconsidérée. En effet, la géométrie et le choix des matériaux du tirant sont propres à chaque véhicule.

Enfin, le procédé de fabrication d'un tel tirant est complexe et coûteux. Il nécessite l'emboutissage, puis l'usinage de pièces métalliques 1. Le matériau viscoélastique 2 est ensuite fixé par une réticulation effectuée directement sur les pièces métalliques 1 ou bien par collage sur ces pièces 1. L'assemblage des pièces métallique 1 et du matériau viscoélastique 2 est ensuite consolidé par un boulonnage. L'outillage nécessaire à la fabrication est ainsi propre à chaque type de tirant et donc à chaque type de véhicule.

Le document DE 100 40 673 divulgue d'autres types de tirants constitués de câbles rigides reliant différentes parties du soubassement du véhicule. Ce type de câble permet de rigidifier la structure du véhicule.

Un but de la présente invention est de pallier tout ou partie des inconvénients de l'art antérieur relevés ci-dessus.

A cette fin, le dispositif de liaison pour structure de véhicule automobile selon l'invention, par ailleurs conforme à la définition générique qu'en donne le préambule ci-dessus, est essentiellement caractérisé en ce que, les éléments élémentaires ont chacun la forme de fils sensiblement cylindriques et sont entrelacés de façon à former un câble tressé.

Par ailleurs, l'invention peut comporter l'une ou plusieurs des caractéristiques suivantes :
- selon une direction perpendiculaire à l'axe longitudinal du dispositif, un ou plusieurs éléments en matière viscoélastique sont adjacents à un ou plusieurs éléments métalliques,
- au moins un premier et un second éléments sont assemblés de façon que, en section transverse, le dispositif présente au moins un premier élément élémentaire adjacent à au moins deux autres éléments élémentaires dont au moins un est de nature différente du premier élément,
- le dispositif est composé de moins d'un tiers d'éléments élémentaires en matière viscoélastique,
- le dispositif comprend entre un tiers et deux tiers d'éléments élémentaires en matière viscoélastique,
- le dispositif de liaison est entouré d'une gaine en matériau de type caoutchouteux.

Un autre but de l'invention est de proposer une structure de véhicule comportant un tel dispositif de liaison.

A cette fin, la structure de véhicule comporte un soubassement comprenant deux longerons, des traverses servant à relier les longerons et des brancards montés dans le prolongement des longerons caractérisé en ce qu'elle comporte en

Un autre but de l'invention est de proposer une structure de véhicule comportant un tel dispositif de liaison.

A cette fin, la structure de véhicule comporte un soubassement comprenant deux longerons, des traverses servant à relier les longerons et des brancards montés dans le prolongement des longerons caractérisé en ce qu'elle comporte en outre au moins un dispositif de liaison, le ou les dispositifs de liaison étant disposés de façon à relier un longeron à une autre partie du soubassement.

Par ailleurs, l'invention peut comporter l'une ou plusieurs des caractéristiques suivantes :
- elle comporte un ou plusieurs dispositifs de liaison reliant un longeron à une pièce située de façon adjacente au longeron, tel qu'un brancard,
- le ou les dispositifs de liaison sont disposés de façon à relier un premier longeron au second longeron,
- la structure de véhicule comporte un plancher reposant sur les longerons et un tunnel situé au milieu du plancher, au moins un premier dispositif de liaison est disposé de façon à relier un premier longeron à une première pièce intermédiaire de structure située entre les longerons et qu'au moins un deuxième dispositif de liaison est disposé de façon à relier une deuxième pièce intermédiaire de structure au deuxième longeron,
- au moins deux dispositifs de liaison sont disposés de façon à relier un premier longeron à une pièce intermédiaire de structure, tel qu'un tunnel, et qu'au moins deux dispositifs de liaison supplémentaires sont disposés de façon à relier cette même pièce au deuxième longeron, de façon que les quatre dispositifs de liaison décrivent une croix,
- au moins un premier dispositif de liaison est disposé de façon à relier une première traverse, à un premier longeron et à ce qu'au moins un deuxième dispositif de liaison est disposé de façon à relier la première traverse au deuxième longeron, de façon que les deux dispositifs de liaison décrivent un V.

D'autres particularités et avantages apparaîtront à la lecture de la description ci-après, faite en référence aux figures dans lesquelles :
- la figure 1 représente une vue schématique en coupe transversale d'un dispositif de liaison conforme à l'art antérieur,
- la figure 2 représente une vue schématique d'un dispositif de liaison conforme à un mode de réalisation de l'invention,
- la figure 3 représente deux vues schématiques en coupe transversale du dispositif de liaison de la figure 2, respectivement selon les lignes AA et BB,
- la figure 4 représente une vue schématique de côté du dispositif de liaison de la figure 2 soumis à des contraintes de traction,
- la figure 5 représente une vue de dessous d'un soubassement de véhicule équipé de dispositifs de liaison, tels que représentés à la figure 2, selon une première configuration,
- la figure 6 représente une vue en perspective d'un véhicule stylisé sur lequel ont été installés des dispositifs de liaison, tels que représentés à la figure 2, selon une seconde configuration.

Les figures 2 et 3 représentent un tirant ou un câble 8 destiné à relier deux parties d'un soubassement de véhicule automobile. Ce câble 8 est composé de fils 1,2 possédant des formes sensiblement cylindriques.

Les fils 1,2 sont entrelacés de façon à former un câble 8 tressé. Ce câble 8 possède des fils 1,2 de nature différente : une partie des fils 1 est en matériau métallique, par exemple en acier, l'autre partie 2 est en matériau viscoélastique, par exemple en SMACTANE, matériau commercialisé par la société SMAC. Ce matériau a été choisi pour sa bonne capacité d'absorption des chocs et des vibrations sur une large bande de fréquence.

Le matériau viscoélastique peut avantageusement être transformé en fils. D'autre part, il doit, de préférence, posséder un module de cisaillement assez faible par rapport à l'acier, afin de permettre un travail optimal de ce matériau sous les contraintes imposées par les fils métalliques 1.

Le nombre de fils 1, 2 composant le câble 8 est compris entre 2 et 10, et de préférence entre 4 et 6. La composition de ce câble 8 comprend toujours au moins un fil 1, 2 de nature différente du ou des autres fils 1 , 2.

Si le câble 8 comprend deux fils, le fil 2 en matériau viscoélastique peut être enroulé autour du fil 1 métallique ou inversement.

Si le câble comprend au moins trois fils, dans une section transverse du câble 8, au moins un fil 1, 2 possède de façon adjacente, c'est à dire dans son voisinage direct, deux fils 1, 2 distincts dont au moins un est de nature différente au premier fil 1, 2 considéré.

Le voisinage direct désigne les fils 1, 2 les plus proches du premier fil 1, 2 considéré. Ainsi chaque fil 1, 2 est au moins en contact direct avec un autre fil 1, 2 ou est séparé de lui par une matière servant à combler les interstices 9.

Ainsi si le câble comporte au moins quatre fils, différents ratios de composition sont possibles :
- moins de 33% de fils 2 en matière viscoélastique pour plus de 66% de fils 1 métalliques,
- entre 33% et 66% de fils 2 en matière viscoélastique pour entre 66% et 33% de fils 1 métalliques,
- plus de 66% de fils 2 en matière viscoélastique pour moins de 33% de fils 1 métalliques.

De préférence, la composition du câble 8 comprend 50% de fils 2 en matière viscoélastique et 50% de fils 1 métalliques.

On constate dans tous les cas que selon une section transverse du câble 8, les fils 1, 2 métalliques et en matière viscoélastique sont empilés avec alternance selon au moins deux directions non parallèles.

Le tressage fait varier également la répartition transversale des fils 1 métalliques et des fils 2 en matière viscoélastique le long du câble 8. Cette situation est illustrée à la figure 3, où deux coupes transversales (AA et BB) du câble 8 de la figure 2, sont réalisées en des endroits distincts.

Une multitude d'agencements différents, des fils 1, 2 de nature différente, peut être envisagée.

Ainsi si l'on considère une direction perpendiculaire à l'axe longitudinal du câble 8, n fils 1 métalliques peuvent être adjacents à m fils 2 en matière viscoélastique ; n et m représentent des nombres entiers, supérieurs ou égaux à 1. Dans cet agencement n et m peuvent avoir des valeurs différentes.

Au sein d'un même câble 8, les fils 1 métalliques peuvent posséder des diamètres différents des fils 2 en matière viscoélastique. De même, des fils 1, 2 de même nature peuvent avoir des diamètres différents.

Dans une variante, on peut retrouver dans un même câble 8 plusieurs fils 1 métalliques, de composition différente, et/ou plusieurs fils 2 en matière viscoélastique, de composition différente.

Les câbles 8 tels que décris précédemment peuvent être protégés de la corrosion par une gaine réalisée en matériau de type caoutchouteux.

La figure 4 représente schématiquement les influences des contraintes de traction et/ou de torsion entre les points d'arrimage 10 du tirant 8. Les fils 2 en matière viscoélastique sont contraints par les fils 1 métalliques, ces derniers étant plus durs et résistants que les fils 2 en matière viscoélastique. Le matériau viscoélastique 2 est ainsi déformé et cisaillé localement sous l'effet des sollicitations imposées entre les points d'arrimage 10. L'énergie vibratoire passant dans les tirants 8 est alors dissipée sous forme d'énergie thermique.

Le câble 8 selon l'invention présente également des propriétés d'amortissement lorsqu'il est soumis à des efforts de torsion ; ce qui n'était pas possible avec les dispositifs de l'art antérieur qui ne peuvent assurer un amortissement satisfaisant lorsqu'ils sont soumis à des efforts de torsion. En effet, ces derniers ne travaillent qu'en traction.

Les tirants 8 selon l'invention possèdent l'avantage d'être moins fragiles que les systèmes existants. En particulier, grâce au tressage, les tirants 8 ne risquent pas de se rompre si une partie de la matière viscoélastique est détériorée suite à une forte sollicitation.

D'autre part, grâce à leur forme, les tirants 8 réalisés selon l'invention peuvent être précontraints facilement entre leurs points d'accrochage 10 ; ce qui n'est pas le cas des tirants de l'art antérieur. En effet, on comprend aisément qu'il est plus complexe de prétendre des tirants constitués d'empilement de bandes 1, 2, tel que représentés à la figure 1, qu'un câble tressé 8. Cette méthode de montage intéressante présente l'avantage d'éviter le problème de flambage des tirants 8.

D'autre part il est possible de précontraindre plusieurs fois un même câble 8 réalisé selon l'invention ce qui n'est pas le cas des dispositifs antérieurs. En cas de flambage, ces derniers doivent être changés.

Ainsi, les dimensions et donc le poids de ce type de tirant 8, peuvent être optimisés. Sachant qu'on utilise en moyenne quatre tirants par véhicule, un allègement important pouvant aller jusqu'à plusieurs kilos peut être réalisé grâce à l'invention.

De plus, le procédé de fabrication du câble 8 selon l'invention est simple et peu coûteux. Un simple tressage du ou des fils 1 métalliques et du ou des fils 2 en matière viscoélastique est réalisé. Des kilomètres de câble 8 tressé peuvent ainsi être produits. Ils sont ensuite découpés selon la dimension des tirants 8 souhaités. Ce procédé simple et rapide est compatible avec la production de grande série.

De plus, le développement d'un nouveau tirant 8 pour un nouveau véhicule peut se faire sans remettre en cause le procédé industriel existant. Ainsi, même si le nombre, le diamètre, le couple de tressage... des fils 1, 2 varient en fonction des propriétés souhaitées (rigidité, énergie vibratoire à dissiper...), la même machine de tressage peut être utilisée.

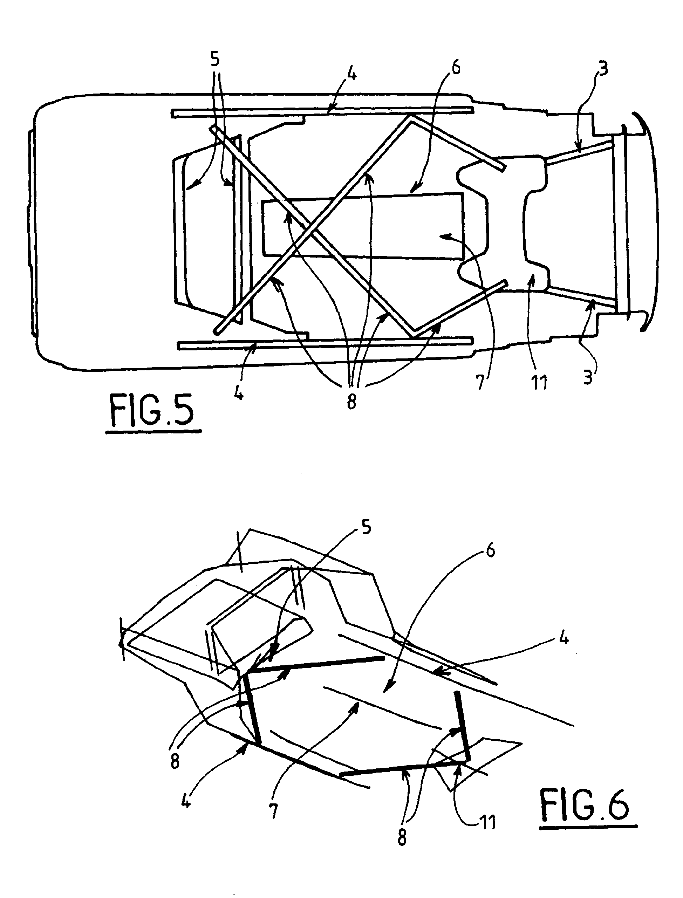

La figure 5 représente un soubassement de véhicule automobile sur lequel sont montés des tirants 8, tels que décrits précédemment.

Le soubassement représenté comprend classiquement des traverses 5, qui servent à relier les deux longerons 4 du véhicule. Un plancher 6 repose sur les longerons 4. Un tunnel 7 est situé au milieu du plancher 6. Le tunnel 7 peut être réalisé par une déformation du plancher 6 par emboutissage ou être constitué d'une pièce rapportée placée sous le plancher 6. De plus, des brancards 3 sont placés à l'avant et à l'arrière du véhicule dans le prolongement des longerons 4.

Des tirants 8 peuvent être disposés entre différentes parties du soubassement. Les tirants 8 sont généralement fixés par boulonnage de façon à permettre un démontage aisé. La liaison entre les tirants 8 et le soubassement du véhicule doit être la plus rigide possible de façon à permettre le passage d'un maximum d'effort.
De préférence, les tirants 8 relient un longeron 4 à une autre partie du soubassement.

Par exemple, les tirants 8 peuvent relier les deux longerons 4 entre eux ou bien relier un longeron 4 et une pièce adjacente à ce longeron 4, tel qu'un brancard 3, une traverse 5 ou une partie du plancher 6.

Les tirants 8 monté sur le soubassement ont généralement une dimension comprise entre 50 et 200 centimètres, et ont de préférence une longueur inférieure à 100 centimètres.

Plusieurs tirants 8 reliant plusieurs parties du soubassement peuvent être utilisés pour améliorer le confort vibro-acoustique d'une caisse de véhicule.

Ainsi, un tirant 8 peut relier un premier longeron 4 à une pièce intermédiaire de structure située entre les deux longerons 4, par exemple une partie du plancher 6, un tunnel 7... Ce dispositif peut être complété par un autre tirant 8 reliant, une autre pièce intermédiaire de structure située entre les deux longerons 4, au deuxième longeron 4.

Dans une configuration particulière, quatre tirants sont utilisés ; deux tirants 8 relient un premier longeron 4 au tunnel 7 et deux autres tirants 8 relient le tunnel 7 au deuxième longeron 4. Les quatre tirants peuvent être disposés relativement de façon à décrire une croix.

Selon une autre configuration, représentée à la figure 6, un premier tirant 8 peut relier une première traverse 5, située à l'arrière du véhicule, à un premier longeron 4 et un deuxième tirant 8 peut relier la première traverse 5 au deuxième longeron 4. En vue de dessous du soubassement, ces deux tirants 8 peuvent décrire sensiblement un V. De la même façon, deux tirants supplémentaires peuvent être utilisés pour relier les deux longerons 4 au berceau moteur 11.

En particulier, il a été constaté que l'implantation de quatre tirants 8 montés, selon la configuration précédemment décrite, sur un soubassement de véhicule de type coupé-cabriolet permet d'amortir le premier mode de torsion de la caisse qui apparaît vers 20 Hz-25 Hz d'environ 12 dB.

D'autre part, lors de la conception d'une structure de véhicule, il peut être choisi de combiner les tirants réalisés selon l'invention à des tirants uniquement métalliques. Cette composition permet notamment d'apporter une rigidité supplémentaire au soubassement.

Le tirant 8 décrit ci-dessus peut aussi être utilisé sur un équipement intérieur de véhicule, de façon à limiter les déformations de l'équipement choisi et ainsi améliorer le confort des passagers. Ainsi le tirant 8 utilisé pour cette application présente, en section transverse, au moins un fil 1 métallique et au moins un fil 2 en matière viscoélastique empilés avec alternance selon au moins deux directions non parallèles.

Le tirant 8 peut ainsi être placé sur l'armature d'un dossier d'assise de véhicule. Un tel dispositif 8 permet de conférer de la rigidité au siège et ainsi de limiter ses mouvements lorsque des contraintes importantes lui sont imposées. Le tirant 8 peut notamment être utilisé sur l'armature du dossier de façon à relier différentes parties constitutives de l'armature.

Par exemple, si l'on considère une armature de siège de forme parallélépipédique, les quatre coins de cette armature peuvent être reliés au moyen de deux tirants 8 disposés en croix.

## Revendications

1. Dispositif de liaison pour structure de véhicule automobile, constitué d'une pièce oblongue composée d'un assemblage d'une part d'au moins un élément élémentaire oblong métallique (1) et d'autre part d'au moins un élément élémentaire oblong en matière viscoélastique (2), disposé de façon à ce qu'en section transverse, le dispositif de liaison (8) présente, au moins un premier (1) et au moins un second (2) éléments empilés avec alternance selon au moins deux directions non parallèles, **caractérisé en ce que** les éléments élémentaires (1, 2) ont chacun la forme de fils sensiblement cylindriques et sont entrelacés de façon à former un câble (8) tressé.

2. Dispositif de liaison selon la revendication 1, **caractérisé en ce que**, selon une direction perpendiculaire à l'axe longitudinal du dispositif (8), un ou plusieurs éléments en matière viscoélastique (2) sont adjacents à un ou plusieurs éléments métalliques (1).

3. Dispositif de liaison selon l'une quelconque des revendications 1 à 2, **caractérisé en ce qu'**au moins un premier (1) et un second (2) éléments sont assemblés de façon que, en section transverse, le dispositif (8) présente au moins un premier élément élémentaire (1, 2) adjacent à au moins deux autres éléments élémentaires (1, 2) dont au moins un est de nature différente du premier élément (1 , 2).

4. Dispositif de liaison selon l'une quelconque des revendications 1 à 3, **caractérisé en ce que** le dispositif (8) est composé de moins d'un tiers d'éléments élémentaires en matière viscoélastique (2).

5. Dispositif de liaison selon l'une quelconque des revendications 1 à 3, **caractérisé en ce que** le dispositif (8) comprend entre un tiers et deux tiers d'éléments élémentaires en matière viscoélastique (2).

6. Dispositif de liaison selon l'une quelconque des revendications 1 à 5, **caractérisé en ce que** le dispositif de liaison (8) est entouré d'une gaine en matériau de type caoutchouteux.

7. Structure de véhicule comportant un soubassement comprenant deux longerons (4), des traverses (5) servant à relier les longerons (4) et des brancards (3) montés dans le prolongement des longerons (4), **caractérisé en ce qu'**elle comporte en outre au moins un dispositif de liaison (8) conforme à l'une quelconque des revendications précédentes, le ou les dispositifs de liaison (8) étant disposés de façon à relier un longeron (4) à une autre partie du soubassement.

8. Structure de véhicule selon la revendication 7, **caractérisé en ce qu'**elle comporte un ou plusieurs dispositifs de liaison (8) reliant un longeron (4) à une pièce située de façon adjacente au longeron (4), tel qu'un brancard (3).

9. Structure de véhicule selon la revendication 7, **caractérisé en ce que** le ou les dispositifs de liaison (8) sont disposés de façon à relier un premier longeron (4) au second longeron (4).

10. Structure de véhicule selon la revendication 7 comportant un plancher (6) reposant sur les longerons (4) et un tunnel (7) situé au milieu du plancher (6), **caractérisé en ce qu'**au moins un premier dispositif de liaison (8) est disposé de façon à relier un premier longeron (4) à une première pièce intermédiaire de structure située entre les longerons (4) et qu'au moins un deuxième dispositif de liaison (8) est disposé de façon à relier une deuxième pièce intermédiaire de structure au deuxième longeron (4).

11. Structure de véhicule selon la revendication 10, **caractérisé en ce qu'**au moins deux dispositifs de liaison (8) sont disposés de façon à relier un premier longeron (4) à une pièce intermédiaire de structure, tel qu'un tunnel (7), et qu'au moins deux dispositifs de liaison (8) supplémentaires sont disposés de façon à relier cette même pièce (7) au deuxième longeron (4), de façon que les quatre dispositifs (8) de liaison décrivent une croix.

12. Structure de véhicule selon la revendication 7, **caractérisé en ce qu'**au moins un premier dispositif de liaison (8) est disposé de façon à relier une première traverse (5), à un premier longeron (4) et à ce qu'au moins un deuxième dispositif de liaison (8) est disposé de façon à relier la première traverse (5) au deuxième longeron (4), de façon que les deux dispositifs (8) de liaison décrivent un V.

## Claims

1. Connection device for a motor vehicle structure, consisting of an oblong part composed of an assembly of, on the one hand, at least one metal oblong basic element (1) and, on the other hand, of at least one oblong basic element (2) made of viscoelastic material, arranged such that, in cross section, the connection device (8) has at least a first element (1) and at least a second element (2) which are stacked in an alternating fashion in at least two non-parallel directions, **characterized in that** the basic elements (1, 2) each have the form of substantially cylindrical yarns and are intertwined so as to form a braided cable (8).

2. Connection device according to Claim 1, **characterized in that**, in a direction perpendicular to the longitudinal axis of the device (8), one or more elements (2) of viscoelastic material are adjacent to one or more metal elements (1).

3. Connection device according to either one of Claims 1 and 2, **characterized in that** at least a first element (1) and a second element (2) are assembled such that, in cross section, the device (8) has at least a first basic element (1, 2) adjacent to at least two other basic elements (1, 2), at least one of which is different in nature from the first element (1, 2).

4. Connection device according to any one of Claims 1 to 3, **characterized in that** the device (8) is composed of less than one-third of basic elements (2) of viscoelastic material.

5. Connection device according to any one of Claims 1 to 3, **characterized in that** the device (8) comprises between one-third and two-thirds of basic elements (2) of viscoelastic material (2).

6. Connection device according to any one of Claims 1 to 5, **characterized in that** the connection device (8) is enclosed by a sheath of rubber-type material.

7. Vehicle structure having a subframe comprising two longitudinal members (4), crossmembers (5) serving to connect the longitudinal members (4), and side members (3) mounted in the continuation of the longitudinal members (4), **characterized in that** it additionally comprises at least one connection device (8) according to any one of the preceding claims, the connection device or devices (8) being arranged so as to connect a longitudinal member (4) to another part of the subframe.

8. Vehicle structure according to Claim 7, **characterized in that** it comprises one or more connection devices (8) connecting a longitudinal member (4) to a part situated adjacently to the longitudinal member (4), such as a side member (3).

9. Vehicle structure according to Claim 7, **characterized in that** the connection device or devices (8) are arranged so as to connect a first longitudinal member (4) to the second longitudinal member (4).

10. Vehicle structure according to Claim 7 comprising a floor (6) resting on the longitudinal members (4) and a tunnel (7) situated in the centre of the floor (6), **characterized in that** at least a first connection device (8) is arranged so as to connect a first longitudinal member (4) to a first intermediate structural part situated between the longitudinal members (4), and **in that** at least a second connection device (8) is arranged so as to connect a second intermediate structural part to the second longitudinal member (4).

11. Vehicle structure according to Claim 10, **characterized in that** at least two connection devices (8) are arranged so as to connect a first longitudinal member (4) to an intermediate structural part, such as a tunnel (7), and **in that** at least two additional connection devices (8) are arranged so as to connect this same part (7) to the second longitudinal member (4), such that the four connection devices (8) describe a cross.

12. Vehicle structure according to Claim 7, **characterized in that** at least a first connection device (8) is arranged so as to connect a first crossmember (5) to a first longitudinal member (4), and **in that** at least a second connection device (8) is arranged so as to connect the first crossmember (5) to the second longitudinal member (4), such that the two connection devices (8) describe a V.

## Patentansprüche

1. Verbindungselement für eine Kraftfahrzeugstruktur, die von einem länglichen Teil gebildet ist, der aus einem Zusammenbau von einerseits mindestens einem metallischen länglichen elementaren Element (1) und andererseits mindestens einem länglichen elementaren Element aus einem viskoelastischen Material (2) besteht, der derart angeordnet ist, dass im Querschnitt das Verbindungselement (8) mindestens ein erstes (1) und mindestens ein zweites (2) Element aufweist, die alternierend in mindestens zwei nicht parallele Richtungen gestapelt sind, **dadurch gekennzeichnet, dass** die elementaren Elemente (1, 2) jeweils die Form von im Wesentlichen zylindrischen Drähten haben und verschlungen sind, um ein Kabelgeflecht (8) zu bilden.

2. Verbindungselement nach Anspruch 1, **dadurch gekennzeichnet, dass** in eine Richtung senkrecht auf die Längsachse des Elements (8) ein oder mehrere Elemente aus viskoelastischem Material (2) an ein oder mehrere metallische Elemente (1) angrenzen.

3. Verbindungselement nach einem der Ansprüche 1 bis 2, **dadurch gekennzeichnet, dass** mindestens ein erstes (1) und ein zweites Element (2) derart zusammengebaut sind, dass im Querschnitt das Element (8) mindestens ein erstes elementares Element (1, 2) aufweist, das an mindestens zwei weitere elementare Elemente (1, 2) angrenzt, von denen mindestens eines von unterschiedlicher Natur zum ersten Element (1, 2) ist.

4. Verbindungselement nach einem der Ansprüche 1 bis 3, **dadurch gekennzeichnet, dass** das Element (8) zu weniger als einem Drittel von elementaren Elementen aus viskoelastischem Material (2) gebildet ist.

5. Verbindungselement nach einem der Ansprüche 1 bis 3, **dadurch gekennzeichnet, dass** das Element (8) zwischen einem Drittel und zwei Drittel elementare Elemente aus viskoelastischem Material (2) umfasst.

6. Verbindungselement nach einem der Ansprüche 1 bis 5, **dadurch gekennzeichnet, dass** das Verbindungselement (8) von einem Mantel aus einem kautschukartigen Material umgeben ist.

7. Fahrzeugstruktur, umfassend einen Unterbau, umfassend zwei Längsträger (4), Querstreben (5), die dazu dienen, die Längsträger (4) und Gabeldeichseln (3), die in der Verlängerung der Längsträger (4) montiert sind, zu verbinden, **dadurch gekennzeichnet, dass** sie ferner mindestens ein Verbindungselement (8) nach einem der vorhergehenden Ansprüche umfasst, wobei das oder die Verbindungselemente (8) derart angeordnet sind, dass sie einen Längsträger (4) mit einem weiteren Teil des Unterbaus verbinden.

8. Fahrzeugstruktur nach Anspruch 7, **dadurch gekennzeichnet, dass** sie ein oder mehrere Verbindungselemente (8) umfasst, die einen Längsträger (4) mit einem Stück verbinden, das sich an den Längsträger (4) angrenzend befindet, wie beispielsweise eine Gabeldeichsel (3).

9. Fahrzeugstruktur nach Anspruch 7, **dadurch gekennzeichnet, dass** das oder die Verbindungselemente (8) derart angeordnet sind, dass sie einen ersten Längsträger (4) mit dem zweiten Längsträger (4) verbinden.

10. Fahrzeugstruktur nach Anspruch 7, umfassend einen Boden (6), der auf den Längsträgern (4) liegt, und einen Tunnel (7), der sich in der Mitte des Bodens (6) befindet, **dadurch gekennzeichnet, dass** mindestens ein erstes Verbindungselement (8) derart angeordnet ist, dass es einen ersten Längsträger (4) mit einem ersten Strukturzwischenstück verbindet, das sich zwischen den Längsträgern (4) befindet, und dass mindestens ein zweites Verbindungselement (8) derart angeordnet ist, dass es ein zweites Strukturzwischenstück mit dem zweiten Längsträger (4) verbindet.

11. Fahrzeugstruktur nach Anspruch 10, **dadurch gekennzeichnet, dass** mindestens zwei Verbindungselemente (8) derart angeordnet sind, dass ein erster Längsträger (4) mit einem Strukturzwischenstück, wie beispielsweise einem Tunnel (7) verbunden wird, und dass mindestens zwei zusätzliche Verbindungselemente (8) derart angeordnet sind, dass dieses selbe Stück (7) mit dem zweiten Längsträger (4) verbunden wird, so dass die vier Verbindungselemente (8) ein Kreuz beschreiben.

12. Fahrzeugstruktur nach Anspruch 7, **dadurch gekennzeichnet, dass** mindestens ein Verbindungselement (8) derart angeordnet ist, dass eine erste Querstrebe (5) mit einem ersten Längsträger (4) verbunden wird, und dass mindestens ein zweites Verbindungselement (8) derart angeordnet ist, dass die erste Querstrebe (5) mit dem zweiten Längsträger (4) verbunden wird, so dass die beiden Verbindungselemente (8) ein V beschreiben.
